# EUROPEAN PATENT APPLICATION

(11) **EP 4 682 340 A1**
(43) Date of publication of application: **21.01.2026**
(21) Application number: 23926803.0
(22) Date of filing: 16.03.2023
(51) Int. Cl.: E05F 15/73, G01S 13/931

(54) **VEHICLE DOOR SYSTEM, CONTROL METHOD AND DEVICE, AND VEHICLE**

(71) Applicant: Shenzhen Yinwang Intelligent Technologies Co., Ltd., Shenzhen, Guangdong 518110 (CN)
(72) Inventor: PENG, Xu, Shenzhen, Guangdong 518129 (CN); XING, Xiao, Shenzhen, Guangdong 518129 (CN); WANG, Xingwu, Shenzhen, Guangdong 518129 (CN); WANG, Fulei, Shenzhen, Guangdong 518129 (CN)
(74) Representative: Gill Jennings & Every LLP
(86) International application number: PCT/CN2023/081834
(87) International publication number: WO 2024/187448

(57) **Abstract**

A vehicle door system (800, 900), a control method (1000), a control apparatus (2000), and a vehicle (100) are disclosed. The vehicle door system (800, 900) includes a first vehicle door (820) and a first lidar (810, 910), and the first vehicle door (820) is located on a first side of a vehicle (720). The first lidar (810, 910) is disposed at a first position on the first side, the first position is outside a vehicle door area on the first side, the first lidar (810, 910) is configured to sense a first obstacle in a sweeping area of the first vehicle door (820), and the vehicle door area is an area in which the first vehicle door (820) is located. The vehicle door system (800, 900) may be used in an intelligent vehicle or an electric vehicle. This helps reduce vehicle costs and door weight while ensuring vehicle safety, as well as simplifies vehicle structural complexity and eases constraints on door design.

## Description

### TECHNICAL FIELD

This application relates to the field of intelligent vehicles, and more specifically, to a vehicle door system, a control method and apparatus, and a vehicle.

### BACKGROUND

With intelligent and electric development of vehicles, an increasing quantity of vehicles are equipped with an automatic door opening function. In a process of controlling a vehicle door to be automatically opened, a sensor usually needs to be used to detect an environment near the vehicle door, to determine whether the environment near the vehicle door meets a door opening condition and a maximum angle at which the vehicle door is allowed to be opened.

In a current technical background, to detect the environment near the vehicle door, a large quantity of sensors usually need to be mounted on the vehicle. For example, one sensor is disposed on each vehicle door. However, the foregoing design not only causes high vehicle costs, but also increases an overall weight of the vehicle.

In view of this, a vehicle door control solution that can ensure vehicle safety and reduce vehicle costs and a vehicle weight urgently needs to be developed.

### SUMMARY

This application provides a vehicle door system, a control method and apparatus, and a vehicle, aimed at reducing both vehicle costs and door weight while ensuring vehicle safety, as well as simplifying vehicle structural complexity and easing constraints on door design.

According to a first aspect, a vehicle door system is provided. The system includes a first vehicle door and a first lidar, and the first vehicle door is located on a first side of a vehicle. The first lidar is disposed at a first position on the first side, the first position is outside a vehicle door area on the first side, the first lidar is configured to sense a first obstacle in a sweeping area of the first vehicle door, and the vehicle door area is an area in which the first vehicle door is located.

In the foregoing technical solution, the lidar disposed outside the vehicle door area may obtain the sweeping area of the vehicle door and environment information near the sweeping area of the vehicle door. This helps the vehicle door system control closing and/or opening of the vehicle door based on the environment information, and further helps control an opening angle of the vehicle door based on the environment information. For example, in a parking lot, whether an obstacle like a vehicle, a pillar, or a wall that affects opening of the vehicle door exists around the vehicle door may be detected by the lidar. In addition, in the foregoing technical solution, an environment around a door on one side of the vehicle and an opening and closing status of the door can be monitored by one lidar. This helps reduce costs of the vehicle and a weight of the door while ensuring safety of the vehicle. In addition, because the lidar is disposed outside the vehicle door area, a sensing range of the lidar is less affected by a structure and a shape of the vehicle door. This helps reduce structural complexity of the vehicle and ease constraints on door design.

With reference to the first aspect, in some implementations of the first aspect, the first position is located in any one of the following: between a front of the vehicle and the vehicle door area on the first side, between a rear of the vehicle and the vehicle door area on the first side, and a B-pillar on the first side.

In the foregoing technical solution, when the door needs to be opened, the first lidar disposed at the first position may be configured to detect environment information near the vehicle door, so that the vehicle determines whether the vehicle door can be normally opened. In a traveling process of the vehicle, the first lidar disposed at the first position may be further configured to detect information about an environment around a vehicle body, to assist in driving. The lidar can be used for a plurality of purposes, which helps further reduce vehicle manufacturing costs.

With reference to the first aspect, in some implementations of the first aspect, when the first position is located between the front of the vehicle and the vehicle door area on the first side, the first position is an area on a front fender on the first side; or when the first position is located between the rear of the vehicle and the vehicle door area on the first side, the first position is an area on a rear fender on the first side.

In some possible implementations, the lidar disposed on the rear fender may be further configured to: after the vehicle door is opened, identify whether an obstacle exists between the opened vehicle door and the vehicle body. When an obstacle exists, the vehicle door system may control the vehicle door to remain open.

In the foregoing technical solution, the lidar is disposed at the fender, to facilitate mounting and maintenance of the lidar.

With reference to the first aspect, in some implementations of the first aspect, the vehicle further includes a second vehicle door, the second vehicle door is located on the first side, and the first lidar is further configured to sense a second obstacle in a sweeping area of the second vehicle door.

In the foregoing technical solution, environments around two or more doors on one side of the vehicle can be monitored by one lidar, so that costs of the vehicle can be reduced. In addition, the vehicle door system can control two or more vehicle doors by analyzing data from the lidar, and complexity of vehicle door control logic can be further reduced.

With reference to the first aspect, in some implementations of the first aspect, the system further includes a first processing unit. The first processing unit is configured to control, based on a position of the first obstacle relative to the first vehicle door, the first vehicle door to be opened, or control the first vehicle door to remain closed.

In the foregoing technical solution, the vehicle door can be controlled to be opened or remain closed based on the position of the obstacle relative to the vehicle door, and the vehicle door can be controlled to be remain closed when the obstacle is too close to the vehicle door, to avoid a collision between the vehicle door and the obstacle, and reduce property losses of a user.

With reference to the first aspect, in some implementations of the first aspect, the first processing unit is configured to: determine a maximum opening dimension of the first vehicle door based on the position of the first obstacle relative to the first vehicle door, where the maximum opening dimension indicates a maximum angle at which the first vehicle door is capable of rotating and/or a maximum width at which the first vehicle door is capable of being opened under obstruction of the first obstacle; and when the maximum opening dimension is greater than or equal to a preset dimension threshold, control the first vehicle door to be opened; or when the maximum opening dimension is less than the preset dimension threshold, control the first vehicle door to remain closed.

For example, the preset dimension threshold may indicate a rotation angle that facilitates getting on/off of the user and/or an opening width that facilitates getting on/off of the user. In an example, when the preset dimension threshold indicates the rotation angle, the preset dimension threshold may be 20 degrees, 25 degrees, or another angle. In another example, when the preset dimension threshold indicates the opening width, the preset dimension threshold may be 30 centimeters, 35 centimeters, or another width.

In the foregoing technical solution, an effective determining basis is provided for determining whether the obstacle hinders opening of the vehicle door.

With reference to the first aspect, in some implementations of the first aspect, the first processing unit is configured to: when the maximum opening dimension is greater than or equal to the preset dimension threshold, control, based on the maximum opening dimension or the preset dimension threshold, the first vehicle door to be opened.

For example, controlling, based on the maximum opening dimension, the first vehicle door to be opened includes: controlling the vehicle door to be opened to the maximum opening dimension; and controlling, based on the preset dimension threshold, the first vehicle door to be opened includes: controlling the vehicle door to be opened to the preset dimension threshold.

In the foregoing technical solution, a rotation angle of the vehicle door can be controlled. This helps improve intelligence of the vehicle and a human-like degree in a process of opening the vehicle door, thereby improving driving experience of the user.

With reference to the first aspect, in some implementations of the first aspect, the first processing unit is further configured to: when controlling the first vehicle door to remain closed, give a prompt that opening of the first vehicle door is restricted.

For example, at least one of a speaker and a display apparatus may be used to inform the user that opening of the first vehicle door is restricted.

In the foregoing technical solution, the user can be reminded in a timely manner that opening of the vehicle door is hindered, so that the user can notice a related obstacle, to avoid collision between the vehicle door and the obstacle caused by forcible opening of the door by the user. After the user avoids the obstacle by adjusting a vehicle pose, the vehicle door may be controlled to be opened, to help improve door opening efficiency.

With reference to the first aspect, in some implementations of the first aspect, the system further includes a transceiver unit, configured to receive a first instruction, where the first instruction is used to request the first vehicle door to be opened. The first processing unit is further configured to: when the transceiver unit receives the first instruction, control the first lidar to collect information about the first obstacle.

In the foregoing technical solution, when the transceiver unit receives the instruction used to control the vehicle door to be opened, the first lidar starts to collect information about an environment near the vehicle door. This helps reduce energy consumption required by the lidar, thereby increasing an endurance range of the vehicle.

With reference to the first aspect, in some implementations of the first aspect, the first lidar is a short-range lidar.

For example, the short-range lidar may include at least one of the following: a mechanical lidar, an optical phased array (optical phased array, OPA) lidar, and a time of flight (time of flight, TOF) lidar.

In the foregoing technical solution, compared with the millimeter-wave radar, the lidar has higher detection precision. Compared with the long-range lidar, the short-range lidar has a smaller blind spot and a larger effective detection range. The short-range lidar is used to detect vicinity of the vehicle door. This helps avoid a security incident caused by insufficient detection precision of the millimeter-wave radar or because the long-range lidar cannot detect an object at a short distance, and helps improve safety performance of the vehicle.

According to a second aspect, a vehicle door system is provided. The system includes a first lidar and a first processing unit. The first lidar is disposed at a first position on a first side of a vehicle, the first position is located outside a vehicle door area on the first side, the first lidar is configured to sense a first obstacle in a sweeping area of the first vehicle door, and the vehicle door area is an area in which the first vehicle door is located. The first processing unit is configured to control, based on a position of the first obstacle relative to the first vehicle door, the first vehicle door to be opened, or control the first vehicle door to remain closed.

With reference to the second aspect, in some implementations of the second aspect, the first processing unit is configured to: determine a maximum opening dimension of the first vehicle door based on the position of the first obstacle relative to the first vehicle door, where the maximum opening dimension indicates a maximum angle at which the first vehicle door is capable of rotating and/or a maximum width at which the first vehicle door is capable of being opened under obstruction of the first obstacle; and when the maximum opening dimension is greater than or equal to a preset dimension threshold, control the first vehicle door to be opened; or when the maximum opening dimension is less than the preset dimension threshold, control the first vehicle door to remain closed.

With reference to the second aspect, in some implementations of the second aspect, the first processing unit is configured to: when the maximum opening dimension is greater than or equal to the preset dimension threshold, control, based on the maximum opening dimension or the preset dimension threshold, the first vehicle door to be opened.

With reference to the second aspect, in some implementations of the second aspect, the first side further includes a second vehicle door, and the first lidar is further configured to sense a second obstacle in a sweeping area of the second vehicle door. The first processing unit is further configured to control, based on a position of the second obstacle relative to the second vehicle door, the second vehicle door to be opened, or control the second vehicle door to remain closed.

With reference to the second aspect, in some implementations of the second aspect, the first processing unit is further configured to: when controlling the first vehicle door to remain closed, give a prompt that opening of the first vehicle door is restricted.

With reference to the second aspect, in some implementations of the second aspect, the system further includes a transceiver unit, configured to receive a first instruction, where the first instruction is used to request the first vehicle door to be opened. The first processing unit is further configured to: when the transceiver unit receives the first instruction, control the first lidar to collect information about the first obstacle.

With reference to the second aspect, in some implementations of the second aspect, the first lidar is a short-range lidar.

According to a third aspect, a control method is provided. The method may include: obtaining information that is about a first obstacle in a sweeping area of a first vehicle door and that is collected by a first lidar, where the first lidar is disposed at a first position on a first side of a vehicle, the first position is outside a vehicle door area on the first side, and the vehicle door area is an area in which the first vehicle door is located; and controlling, based on a position of the first obstacle relative to the first vehicle door, the first vehicle door to be opened, or controlling the first vehicle door to remain closed.

With reference to the third aspect, in some implementations of the third aspect, controlling, based on the position of the first obstacle relative to the first vehicle door, the first vehicle door to be opened, or controlling the first vehicle door to remain closed includes: determining a maximum opening dimension of the first vehicle door based on the position of the first obstacle relative to the first vehicle door, where the maximum opening dimension indicates a maximum angle at which the first vehicle door is capable of rotating and/or a maximum width at which the first vehicle door is capable of being opened under obstruction of the first obstacle; and when the maximum opening dimension is greater than or equal to a preset dimension threshold, controlling the first vehicle door to be opened; or when the maximum opening dimension is less than the preset dimension threshold, controlling the first vehicle door to remain closed.

With reference to the third aspect, in some implementations of the third aspect, when the maximum opening dimension is greater than or equal to the preset dimension threshold, controlling the first vehicle door to be opened includes: when the maximum opening dimension is greater than or equal to the preset dimension threshold, controlling, based on the maximum opening dimension or the preset dimension threshold, the first vehicle door to be opened.

With reference to the third aspect, in some implementations of the third aspect, the first side further includes a second vehicle door, the first lidar is further configured to sense a second obstacle in a sweeping area of the second vehicle door, and the method further includes: controlling, based on a position of the second obstacle relative to the second vehicle door, the second vehicle door to be opened, or controlling the second vehicle door to remain closed.

With reference to the third aspect, in some implementations of the third aspect, the method further includes: when controlling the first vehicle door to remain closed, giving a prompt that opening of the first vehicle door is restricted.

With reference to the third aspect, in some implementations of the third aspect, the method further includes: receiving a first instruction, where the first instruction is used to request the first vehicle door to be opened; and controlling, according to the first instruction, the first lidar to collect information about the first obstacle.

With reference to the third aspect, in some implementations of the third aspect, the first lidar is a short-range lidar.

According to a fourth aspect, a control apparatus is provided. The apparatus includes an obtaining unit and a processing unit. The obtaining unit is configured to obtain information that is about a first obstacle in a sweeping area of a first vehicle door and that is collected by a first lidar. The first lidar is disposed at a first position on a first side of a vehicle, the first position is outside a vehicle door area on the first side, and the vehicle door area is an area in which the first vehicle door is located. The processing unit is configured to: control, based on a position of the first obstacle relative to the first vehicle door, the first vehicle door to be opened, or control the first vehicle door to remain closed.

With reference to the fourth aspect, in some implementations of the fourth aspect, the processing unit is configured to: determine a maximum opening dimension of the first vehicle door based on the position of the first obstacle relative to the first vehicle door, where the maximum opening dimension indicates a maximum angle at which the first vehicle door is capable of rotating and/or a maximum width at which the first vehicle door is capable of being opened under obstruction of the first obstacle; and when the maximum opening dimension is greater than or equal to a preset dimension threshold, control the first vehicle door to be opened; or when the maximum opening dimension is less than the preset dimension threshold, control the first vehicle door to remain closed.

With reference to the fourth aspect, in some implementations of the fourth aspect, the processing unit is configured to: when the maximum opening dimension is greater than or equal to the preset dimension threshold, control, based on the maximum opening dimension or the preset dimension threshold, the first vehicle door to be opened.

With reference to the fourth aspect, in some implementations of the fourth aspect, the first side further includes a second vehicle door, and the first lidar is further configured to sense a second obstacle in a sweeping area of the second vehicle door. The processing unit is further configured to: control, based on a position of the second obstacle relative to the second vehicle door, the second vehicle door to be opened, or control the second vehicle door to remain closed.

With reference to the fourth aspect, in some implementations of the fourth aspect, the processing unit is further configured to: when controlling the first vehicle door to remain closed, give a prompt that opening of the first vehicle door is restricted.

With reference to the fourth aspect, in some implementations of the fourth aspect, the obtaining unit is further configured to receive a first instruction, where the first instruction is used to request the first vehicle door to be opened; and the processing unit is further configured to control, according to the first instruction, the first lidar to collect information about the first obstacle.

With reference to the fourth aspect, in some implementations of the fourth aspect, the first lidar is a short-range lidar.

According to a fifth aspect, a control apparatus is provided. The apparatus includes: a memory, configured to store a computer program; and a processor, configured to execute the computer program stored in the memory, so that the apparatus performs the method in any possible implementation of the third aspect.

According to a sixth aspect, a vehicle is provided. The vehicle includes the vehicle door system in any possible implementation of the first aspect or the second aspect, or includes the control apparatus in any possible implementation of the fourth aspect or the fifth aspect.

According to a seventh aspect, a computer program product is provided. The computer program product includes computer program code. When the computer program code is run on a computer, the computer is enabled to perform the method in any possible implementation of the third aspect.

It should be noted that the computer program code may be completely or partially stored in a first storage medium. The first storage medium may be encapsulated with a processor, or encapsulated separately from a processor.

According to an eighth aspect, a computer-readable medium is provided, where the foregoing computer-readable medium stores instructions, and when the instructions are executed by a processor, the processor implements the method in any possible implementation of the third aspect.

According to a ninth aspect, a chip is provided, where the chip includes a circuit, and the circuit is configured to perform the method in any possible implementation of the third aspect.

### BRIEF DESCRIPTION OF DRAWINGS

FIG. 1 is a functional block diagram of a vehicle according to an embodiment of this application;
FIG. 2 is a diagram of an arrangement position of a lidar according to an embodiment of this application;
FIG. 3(a) to FIG. 3(f) are diagrams of sensing ranges of lidars according to an embodiment of this application;
FIG. 4 is a block diagram of an architecture of a control system according to an embodiment of this application;
FIG. 5 is a schematic flowchart of a control method according to an embodiment of this application;
FIG. 6(a) to FIG. 6(d) are diagrams of application scenarios according to an embodiment of this application;
FIG. 7(a) and FIG. 7(b) are diagrams of other application scenarios according to an embodiment of this application;
FIG. 8 is a block diagram of a vehicle door system according to an embodiment of this application;
FIG. 9 is another block diagram of a vehicle door system according to an embodiment of this application;
FIG. 10 is a schematic flowchart of a control method according to an embodiment of this application;
FIG. 11 is a block diagram of a control apparatus according to an embodiment of this application; and
FIG. 12 is another block diagram of a control apparatus according to an embodiment of this application.

### DESCRIPTION OF EMBODIMENTS

In descriptions of embodiments of this application, unless otherwise specified, "/" means "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit positions, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

As described above, in a currently commonly used solution of automatic door opening control, at least one sensor, for example, an ultrasonic sensor or a millimeter-wave sensor, needs to be mounted on each vehicle door. A detectable area of the ultrasonic sensor is restricted. To implement high detection precision, two to three ultrasonic sensors usually need to be mounted on a single vehicle door. In addition, because precision of ultrasonic data is susceptible to vibration interference, during specific implementation, a vibration stopper further needs to be added to the vehicle door. Consequently, a weight and costs of the vehicle door are additionally increased. A detection range and precision of the millimeter-wave sensor are better than those of the ultrasonic sensor. Generally, only one millimeter-wave sensor needs to be mounted on a single vehicle door. However, the millimeter-wave radar cannot penetrate a metal part. Therefore, when the millimeter-wave radar is deployed, impact of a structure and a shape of the vehicle door on a millimeter-wave transmission range needs to be considered. In this way, a structure and a shape design of the vehicle door are greatly restricted.

In view of this, this application provides a vehicle door system, a method, and an apparatus. The vehicle door system may include a short-range lidar and a processing unit. The short-range lidar is disposed on a side of a vehicle and is located at a position outside a vehicle door area. In addition, a sensing range of the short-range lidar covers a sweeping area of a vehicle door. The processing unit may control, based on environment information obtained by the short-range lidar, the vehicle door to be opened or remain closed. In the foregoing vehicle door control solution, whether environments near two vehicle doors meet a door opening condition and/or a maximum angle at which the vehicle doors are allowed to be opened can be determined based on information that is about the environments near the vehicle doors and that is obtained by two lidars. This helps reduce bill of material (bill of material, BOM) costs of the entire vehicle and a door weight. In addition, due to unique positioning of the two sensors, structural complexity of a vehicle can be further reduced and constraints on door design can be eased.

It may be understood that the sweeping area of the vehicle door includes space occupied in a rotation process of the vehicle door. More specifically, the sweeping area of the vehicle door may be space occupied in a process in which the vehicle door rotates from a position 1 to a position 2. The position 1 may be a corresponding position of the vehicle door in a closed state. The position 2 may be a position corresponding to a maximum angle at which the vehicle door can be opened when there is no obstacle. Alternatively, the position 2 may be a position corresponding to a preset vehicle door opening angle in the vehicle system.

The following describes the technical solution of embodiments in this application with reference to accompanying drawings.

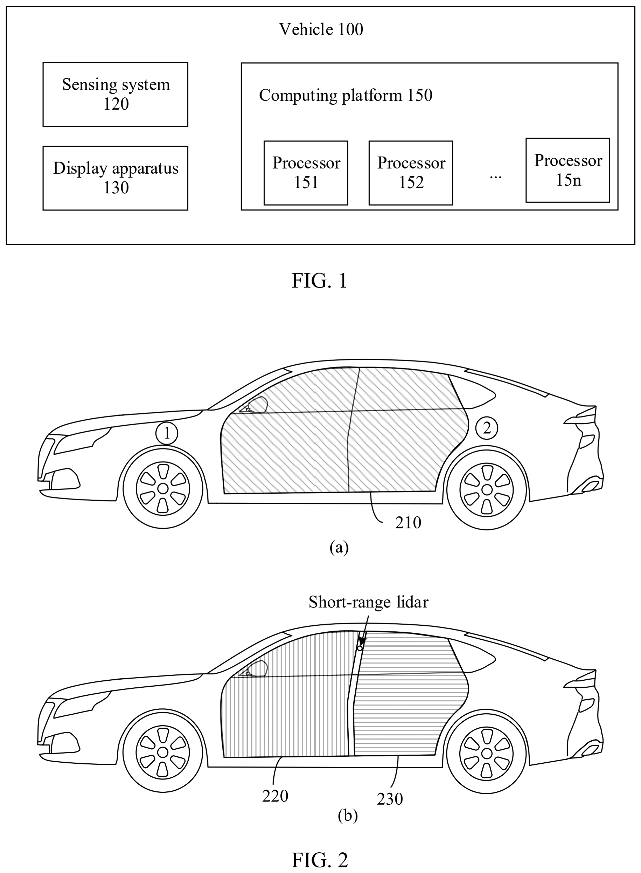

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system. The positioning system may be a global positioning system (global positioning system, GPS), a BeiDou system or another positioning system, or an inertial measurement unit (inertial measurement unit, IMU). For another example, the sensing system 120 may further include one or more of a lidar, a millimeter-wave radar, an ultrasonic radar, and a photographing apparatus.

The display apparatus 130 in a cabin is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cabin, for example, a digital instrument display (referred to as an instrument screen for short below), a central control screen, a display in front of a passenger (also referred to as a front-row passenger) in a co-driver seat, a display in front of a passenger in a left back row, and a display in front of a passenger in a right back row, and even a vehicle window may also be used as a display for displaying. In some possible implementations, one or more of the vehicle-mounted displays may be a human machine interface (human machine interface, HMI). For example, the central display may be an HMI. Head-up display, also referred to as a head-up display system, is mainly configured to display driving information such as a speed and navigation on a display device (for example, a windshield) in front of the user, to reduce line-of-sight transfer time of the user, avoid a pupil change caused by a line-of-sight transfer of the user, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system.

Some or all functions of the vehicle 100 may be controlled by the computing platform 150. The computing platform 150 may include one or more processors, such as processors 151 to 15n (n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital instruction processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The computing platform 150 may include an advanced driving assistance system (advanced driving assistant system, ADAS). The ADAS obtains information from around the vehicle by using a plurality of sensors (including but not restricted to: a lidar, a millimeter-wave radar, a camera apparatus, an ultrasonic sensor, a global positioning system, and an inertial measurement unit) in the vehicle, and analyzes and processes the obtained information, to implement functions such as obstacle sensing, target recognition, vehicle positioning, path planning, and user monitoring/alerting. In this way, vehicle driving safety, automation, and comfort are improved.

In terms of logical functions, the ADAS system generally includes three main functional modules: a sensing module, a decision-making module, and an execution module. The sensing module senses an ambient environment of a vehicle body by using a sensor, and inputs corresponding real-time data to a processing center at a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision instruction from the decision-making module, the execution module takes a corresponding action, for example, driving, lane change, steering, braking, or warning.

In this embodiment of this application, the computing platform 150 may control, based on information that is about an obstacle near a vehicle door of the vehicle 100 and that is obtained by the sensing system 120, the vehicle door to be opened or to remain closed. Further, the computing platform 150 may control the display apparatus 130 to display a vehicle door control result, so that a user learns of the vehicle door control result in a timely manner.

In this embodiment of this application, to reduce costs and a weight of the vehicle, a lidar may be disposed on one side of the vehicle, to obtain information about a sweeping area of the vehicle door and information about an environment near the sweeping area. Specifically, the lidar may be disposed on a side of the vehicle and located outside the vehicle door area, and a sensing range of the lidar covers at least the sweeping area of the vehicle door.

It should be noted that the vehicle door area is located in a vehicle body, and may include a part between a position at which a hinge is disposed on a front door of the vehicle and a position at which a sealing rubber strip is disposed on a rear door of the vehicle when the vehicle door is in a closed state. For example, the vehicle is a five-seat vehicle. The vehicle door area may be shown by a shadow area 210 in (a) in FIG. 2 (FIG. 2a for short below).

In some possible implementations, the vehicle door area may include a front door area and/or a rear door area. The front door area may include a part between a position at which a hinge is disposed on a front door of the vehicle and a position at which a sealing rubber strip is disposed on the front door of the vehicle, and the rear door area may include a part between a position at which a hinge is disposed on a rear door of the vehicle and a position at which a sealing rubber strip is disposed on the rear door of the vehicle. For example, the vehicle is a five-seat vehicle. The front door area and the rear door area may be shown by shadow areas 220 and 230 in (b) in FIG. 2 (FIG. 2b for short below).

FIG. 2 is a diagram of an arrangement position of a lidar according to an embodiment of this application.

As shown in FIG. 2a, the lidar may be disposed at a position between a front of the vehicle and a vehicle door area, for example, disposed on a front fender. More specifically, the lidar may be disposed above a front wheel eyebrow, for example, at ① in FIG. 2a. Alternatively, the lidar may be disposed at a position between a rear of the vehicle and the vehicle door area, for example, disposed on a rear fender. More specifically, the lidar may be disposed above a rear wheel eyebrow, for example, at ② in FIG. 2a.

As shown in FIG. 2b, the lidar may be disposed at a position between a front door area and a rear door area, for example, on a B-pillar of a vehicle.

In some possible implementations, one lidar or a plurality of lidars may be disposed on one side of the vehicle.

In some possible implementations, a specific arrangement position of the lidar outside the vehicle door area may alternatively be determined based on one or more of the following: a blind spot, a ranging capability, and a field of view (field of view, FOV) of the lidar. A specific arrangement position may include a distance from a boundary of a vehicle door area (for example, a position of a vehicle door hinge or a position of a sealing rubber strip) and/or a distance from a lowest point of a wheel.

For example, the lidar may include at least one of a short-range lidar, a medium-range lidar, and a long-range lidar. The following uses an example in which the lidar is a short-range lidar to describe requirements on a sensing range of the lidar disposed at different positions.

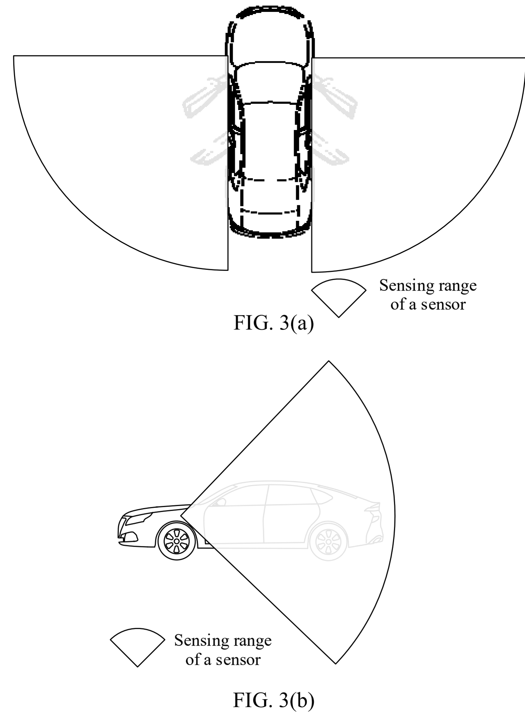

FIG. 3(a) and FIG. 3(b) respectively show diagrams of a horizontal sensing range and a vertical sensing range that are required by the short-range lidar when the short-range lidar is disposed at a position between the front of the vehicle and the vehicle door area, for obtaining a sweeping area of a vehicle door and information about an environment near the sweeping area of the vehicle door.

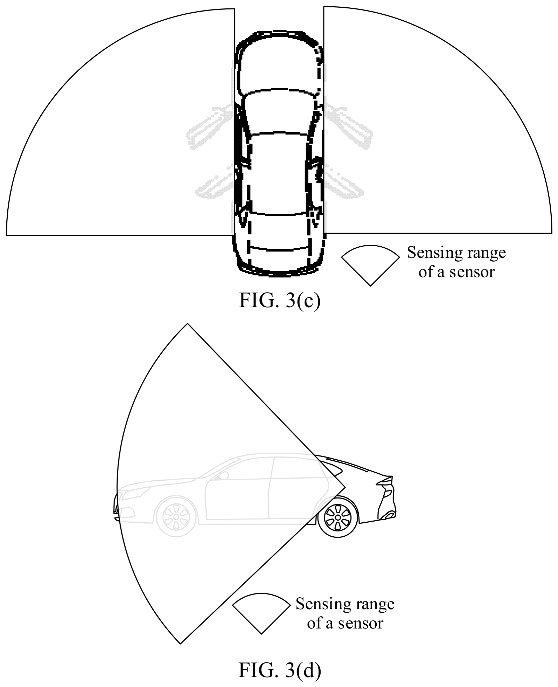

FIG. 3(c) and FIG. 3(d) respectively show diagrams of a horizontal sensing range and a vertical sensing range that are required by the short-range lidar when the short-range lidar is disposed at a position between the rear of the vehicle and the vehicle door area, for obtaining a sweeping area of the vehicle door and information about an environment near the sweeping area of the vehicle door.

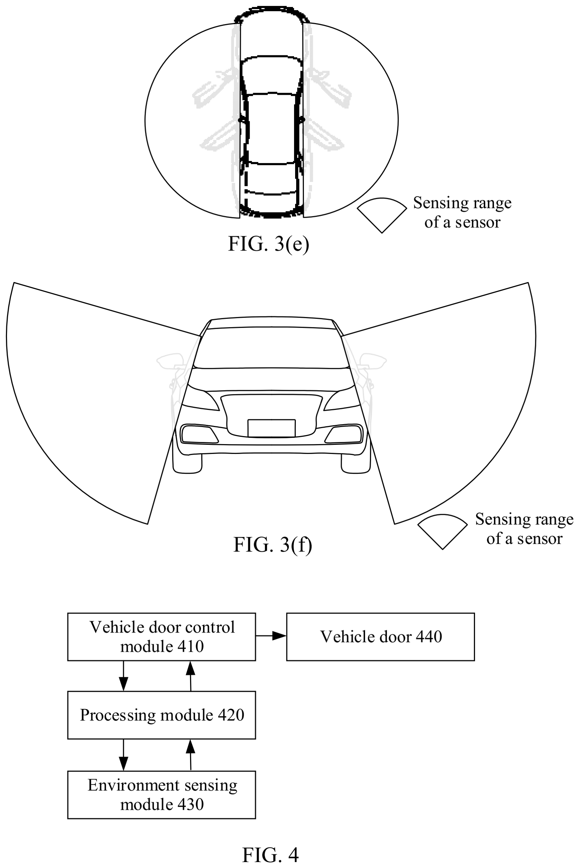

FIG. 3(e) and FIG. 3(f) respectively show diagrams of a horizontal sensing range and a vertical sensing range that are required by the short-range lidar when the short-range lidar is disposed on the B-pillar, for obtaining a sweeping area of the vehicle door and information about an environment near the sweeping area of the vehicle door.

For example, the short-range lidar may include at least one of the following: a mechanical lidar, an OPA lidar, and a TOF lidar. The TOF lidar emits an infrared signal of a specific wavelength by using an emitter, and the signal irradiates a target object and is reflected. A spatial distance of the target object is calculated based on a relationship between a distance and a speed of light or a phase difference by using a reflected signal of the target object, and a point cloud image that describes a position and a distance of a spatial object may be finally obtained.

Ranging of the TOF lidar can range from 5 m to 10 m. Ranging precision can reach 3 cm to 5 cm. Horizontal and vertical resolutions can be determined based on an actual scenario requirement. A blind spot of the TOF lidar is within 5 cm to 15 cm, which is less than a blind spot of 60 cm of the long-distance lidar. A horizontal FOV and a vertical FOV may be determined based on an actual scenario requirement. In this way, the foregoing requirements for lidar arrangement and a sensing range can be met. For example, Table 1 shows a correspondence between a parameter in the TOF lidar and a corresponding parameter value.

**Table 1**

| Parameters | Parameter values |
|---|---|
| Ranging capability | 5 m to 50 m |
| Ranging precision | 3 cm to 5 cm |
| Blind spot | 5 cm to 15 cm |
| Horizontal FOV | 90° to 180° |
| Vertical FOV | 25° to 90° |

It should be understood that the correspondence between a parameter and a parameter value listed in Table 1 is merely an example for description.

FIG. 4 is a block diagram of an architecture of a control system according to an embodiment of this application. As shown in FIG. 4, the system includes a vehicle door control module 410, a processing module 420, an environment sensing module 430, and a vehicle door 440. The vehicle door control module 410 and the processing module 420 each may include one or more processors in the computing platform 150 shown in FIG. 1. The vehicle door control module 410 is configured to control the vehicle door 440 to be opened and/or closed, and may further control a rotation angle of the vehicle door. The processing module 420 is configured to: control the environment sensing module 430 to obtain environment information, and determine, based on the environment information, whether the vehicle door control module 410 is allowed to control the vehicle door 440 to be opened. The environment sensing module 430 may include one or more sensors in the sensing system 120 shown in FIG. 1, for example, may include a short-range lidar. More specifically, arrangement positions and sensing ranges of one or more sensors may be respectively shown in FIG. 2 and FIG. 3(a) to FIG. 3(f) for collecting a sweeping area of a vehicle door and information about an environment near the sweeping area of the vehicle door. The environment information includes position information of an obstacle and the like.

It should be understood that the foregoing modules are merely examples. In actual application, the foregoing modules may be added or deleted based on an actual requirement. For example, in the system architecture shown in FIG. 4, the vehicle door control module 410 and the processing module 420 may be combined into one module.

In a specific implementation process, when receiving a door opening instruction, the vehicle door control module 410 sends a notification to the processing module 420, so that the processing module 420 controls the environment sensing module 430 to obtain the sweeping area of the vehicle door and information about an environment near the sweeping area of the vehicle door. Further, the processing module 420 processes and analyzes the sweeping area of the vehicle door and the information about the environment near the sweeping area of the vehicle door, determines whether there is an obstacle that affects opening and closing angles of the vehicle door in the sweeping area of the vehicle door, and further sends a control instruction to the vehicle door control module 410 based on a relative position relationship between the obstacle and the vehicle door. The control instruction may include an instruction for controlling the vehicle door to be opened and/or remain closed, or the control instruction may further include information about a maximum angle at which the vehicle door is allowed to be opened. Further, the vehicle door control module 410 controls, according to the control instruction, the vehicle door 440 to be opened and/or remain closed.

In a specific implementation process, the vehicle door control module 410 may include a vehicle integration unit (vehicle integration unit, VIU), or may include a body control module (body control module, BCM), or may include another type of vehicle door controller. The processing module 420 may include at least one of an autonomous driving domain controller (autonomous driving domain controller, ADC), or referred to as a mobile data center (mobile data center, MDC), a vehicle domain controller (vehicle domain controller, VDC), and a chassis domain controller (chassis domain controller, CDC). The processing module 420 may further include another computing platform, for example, an in-car application server (in-car application server, ICAS) controller, a body domain controller (body domain controller, BDC), a special equipment system (special equipment system, SAS), a media graphics unit (media graphics unit, MGU), a body super core (body super core, BSC), or an ADAS super core (ADAS super core). This is not restricted in this application. The ICAS may include at least one of the following: a vehicle control server ICAS 1, an intelligent driving server ICAS 2, an intelligent cockpit server ICAS 3, and an information entertainment server ICAS 4.

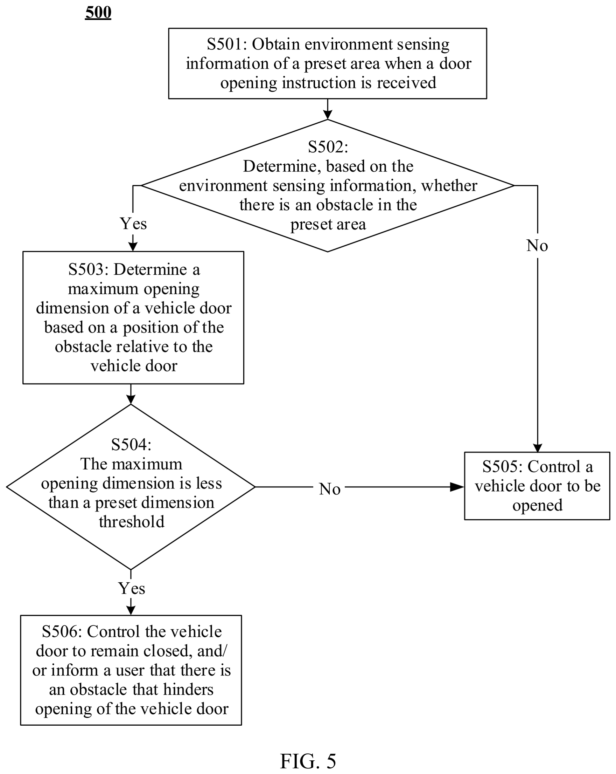

FIG. 5 is a schematic flowchart of a control method according to an embodiment of this application. The method may be applied to the vehicle shown in FIG. 1, or the method may be performed by the system shown in FIG. 4. For example, the following uses an example in which the method is performed by a computing platform of a vehicle for description. The method 500 may include the following steps.

S501: Obtain environment sensing information of a preset area when a door opening instruction is received.

For example, the door opening instruction is an instruction for requesting at least one of vehicle doors to be opened, and the preset area may include a sweeping area of each of the at least one vehicle door. For example, the door opening instruction may be an instruction for controlling a vehicle door 1 to be opened, and the preset area may include a sweeping area of the vehicle door 1.

In an example, the door opening instruction may be generated in response to an operation of a user. For example, if the user taps a "one-tap door opening" button in the vehicle, the door opening instruction is generated in response to the operation of the user. For another example, the user taps "one-tap door opening" on a mobile terminal associated with the vehicle. Further, the mobile terminal sends, to the vehicle by using a communication system, a first signal used to control the vehicle to open the door. When receiving the first signal, the vehicle generates the door opening instruction in response to the first signal.

In another example, the door opening instruction may be automatically generated by the vehicle. For example, the user presets, in a system, a condition for automatically opening the door of the vehicle, and the vehicle generates the door opening instruction when detecting that the vehicle meets the condition for automatically opening the door.

For example, when receiving the door opening instruction, the computing platform may control the lidar in FIG. 2 or FIG. 3(a) to FIG. 3(f) to obtain the environment sensing information of the preset area.

S502: Determine, based on the environment sensing information, whether there is an obstacle in the preset area.

Specifically, when there is an obstacle in the preset area, S503 is performed; otherwise, S505 is performed.

S503: Determine a maximum opening dimension of the vehicle door based on a position of the obstacle relative to the vehicle door.

For example, the position of the obstacle relative to the vehicle door may be determined based on point cloud data that is of the obstacle and that is obtained by the lidar.

For example, the opening dimension of the vehicle door includes a rotation angle and/or an opening width of the vehicle door. The opening width of the vehicle door may be a distance between a second point of an edge of the vehicle door and a third point of a door frame of the vehicle door. The second point may be any point on an edge of a side that is of the vehicle door and that is away from a hinge. When the vehicle door is closed, the second point coincides with the third point. Alternatively, the opening width of the vehicle door may be determined in another manner.

For example, the position of the obstacle relative to the vehicle door may include coordinates of the obstacle in a vehicle coordinate system.

In some possible implementations, if the computing platform prestores a position of the lidar on the vehicle, the coordinates of the obstacle in the vehicle coordinate system may be determined based on the position of the lidar and point cloud data of the obstacle.

In some possible implementations, a sensing range of the lidar further includes a vehicle door area, that is, the lidar may sense a vehicle door in a closed state. In this case, point cloud data obtained by the lidar includes point cloud data of an obstacle and point cloud data of the vehicle door, further, a position of the obstacle relative to the vehicle door may be determined based on the point cloud data of the obstacle and the point cloud data of the vehicle door.

For example, determining the maximum opening dimension of the vehicle door based on the position of the obstacle relative to the vehicle door includes: determining a first point of the obstacle based on the position of the obstacle relative to the vehicle door. The maximum opening dimension of the vehicle door is determined based on an included angle between a straight line on which a first point of the obstacle and a vehicle door hinge are located and an x-axis of the vehicle coordinate system (or a central axis of the vehicle). The first point of the obstacle is a point at which the obstacle first collides with the vehicle door in a rotation process of the vehicle door.

S504: Determine whether the maximum opening dimension is less than a preset dimension threshold.

In some possible implementations, the preset dimension threshold may be preset by a system, or may be set by the user.

For example, the preset dimension threshold may indicate a rotation angle that facilitates getting on/off of the user and/or an opening width that facilitates getting on/off of the user. In an example, when the preset dimension threshold indicates the rotation angle, the preset dimension threshold may be 20 degrees, 25 degrees, or another angle. In another example, when the preset dimension threshold indicates the opening width, the preset dimension threshold may be 30 centimeters, 35 centimeters, or another width.

Specifically, when the maximum opening dimension is greater than or equal to the preset dimension threshold, S505 is performed; otherwise, S506 is performed.

S505: Control the vehicle door to be opened.

In an example, if there is no obstacle in the preset area, the vehicle door may be directly controlled to be opened to an extreme angle. The extreme angle is a maximum angle of the vehicle door that can be opened.

In another example, if there is an obstacle in the preset area, the vehicle door may be controlled to be opened to a maximum opening dimension, or the vehicle door may be controlled to be opened to a preset dimension threshold.

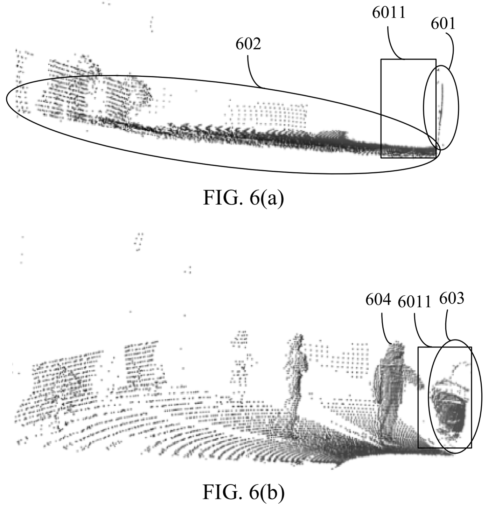

FIG. 6(a) to FIG. 6(d) are diagrams of point cloud data collected by the lidar.

As shown in FIG. 6(a), point cloud data includes a diagram of point cloud data 601 of a vehicle door in a closed state, and a diagram of point cloud data 602 of a sweeping area of the vehicle door and an obstacle near the vehicle door. For example, the sweeping area of the vehicle door may be shown in 6011.

As shown in FIG. 6(b), point cloud data includes a diagram of point cloud data 603 of a vehicle door in an open state and a diagram of point cloud data 604 of an obstacle, and a part of the obstacle indicated by the point cloud data 604 is located in a sweeping area 6011 of the vehicle door, but does not affect opening of the vehicle door.

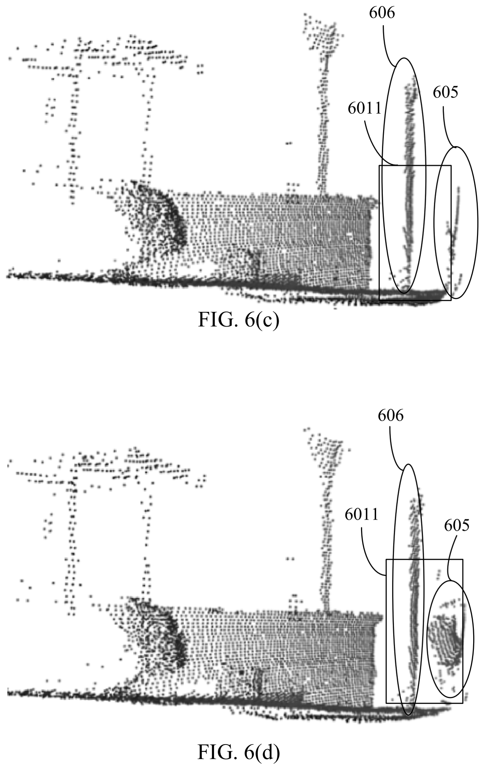

As shown in FIG. 6(c), point cloud data includes a diagram of point cloud data 605 of a vehicle door in a closed state and a diagram of point cloud data 606 of an obstacle in a sweeping area 6011 of the vehicle door, and the obstacle indicated by the point cloud data 606 may hinder opening of the vehicle door. Therefore, a maximum opening angle of the vehicle door may be determined based on the point cloud data 606. Further, if it is determined that the maximum opening angle of the vehicle door is greater than or equal to a preset angle threshold, the vehicle door may be controlled to be opened. FIG. 6(d) is a diagram of point cloud data collected by the lidar when a vehicle door is opened. Point cloud data of the vehicle door in an open state is shown in 607.

S506: Control the vehicle door to remain closed, and/or inform the user that there is an obstacle that hinders opening of the vehicle door.

For example, controlling the vehicle door to remain closed may include: controlling the vehicle door to be locked.

For example, a display device may be used to inform the user that an obstacle hinders opening of the vehicle door. The display device may be one or more of the display apparatuses 130 in the foregoing embodiment. Alternatively, a voice broadcast manner may be used to inform the user that an obstacle hinders opening of the vehicle door.

According to the control method provided in this embodiment of this application, the opening angle of the vehicle door can be controlled based on the position of the obstacle relative to the vehicle door. This helps improve intelligence of the vehicle and a human-like degree in a process of opening the vehicle door, and helps improve driving experience of the user.

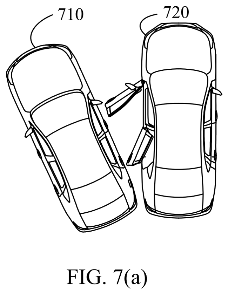

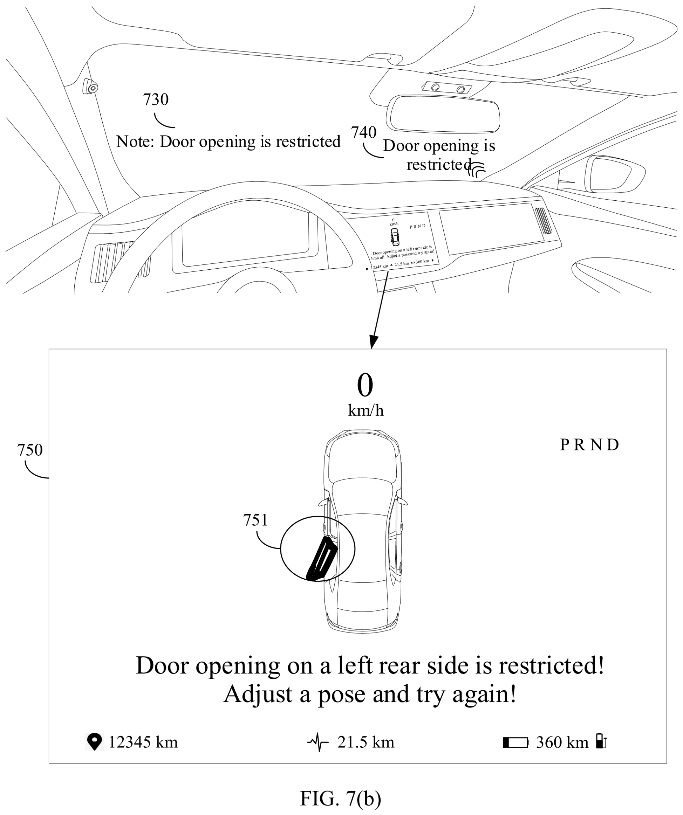

FIG. 7(a) and FIG. 7(b) show application scenarios of a control method according to an embodiment of this application. As shown in FIG. 7(a), a vehicle 710 is parked on a left side of a parking position of a vehicle 720. In this way, a driver door of the vehicle 720 can be normally opened, but opening of a left-side rear-row door of the vehicle 720 is restricted.

In the foregoing scenario, when receiving an instruction for controlling a driver's door to be opened, the vehicle 720 may determine, based on a sensing result of a lidar, that there is no obstacle in a sweeping area of the driver's door, and further control the driver's door to be opened. When the vehicle 720 receives an instruction for controlling the left-side rear-row door, the vehicle 720 may determine, based on the sensing result of the lidar, that an obstacle in a sweeping area of the left-side rear-row door blocks opening of the door, so that a maximum opening dimension of the left-side rear-row door is less than a preset dimension threshold. In this way, the left-side rear-row door is controlled to remain closed.

Further, when the vehicle 720 determines that the left-side rear-row door cannot be opened to the preset dimension threshold due to the obstacle, the vehicle 720 may notify the user that the door cannot be normally opened. For example, as shown in FIG. 7(b), the user may be notified, by using at least one of a speaker, an HUD, and a central control display, of a specific vehicle door whose opening is restricted. For example, as shown in 730, the HUD displays "Note: Door opening is restricted." Alternatively, as shown in 740, the speaker broadcasts "Door opening is restricted." Alternatively, as shown in 750, the central control display displays "Door opening on a left rear side is restricted! Adjust a pose and try again." In an example, for a restricted vehicle door, "highlighting" or "blinking" may be further performed on the central control display, as shown in 751.

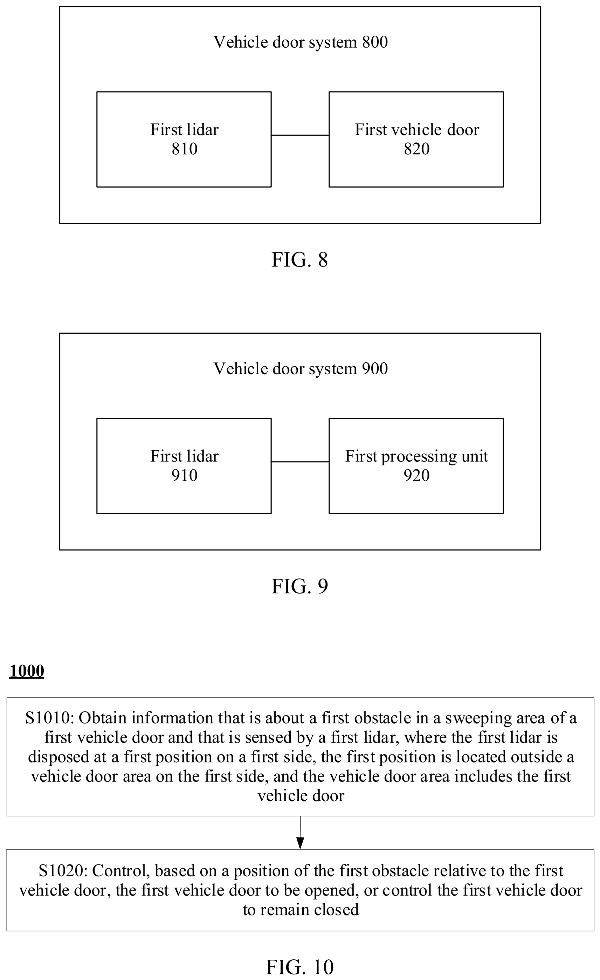

FIG. 8 is a block diagram of a vehicle door system 800 according to an embodiment of this application. The vehicle door system 800 may be configured to implement the method 500. As shown in FIG. 8, the vehicle door system 800 includes a first lidar 810 and a first vehicle door 820. The first vehicle door 820 is located on a first side of the vehicle door system 800. The first lidar 810 is disposed at a first position on the first side, the first position is outside a vehicle door area on the first side, the first lidar 810 is configured to sense a first obstacle in a sweeping area of the first vehicle door 820, and the vehicle door area is an area in which the first vehicle door 820 is located.

For example, the first side may be a left side or a right side of a vehicle.

For example, the first lidar 810 may include one lidar in the sensing system 120 shown in FIG. 1. Alternatively, the first lidar 810 may include one lidar in the environment sensing module 430 shown in FIG. 4.

For example, a specific arrangement position of the first lidar 810 may be shown in FIG. 2. For example, the first lidar 810 may be disposed at any one of the following: between a front of the vehicle and the vehicle door area on the first side, between a rear of the vehicle and the vehicle door area on the first side, and a B-pillar on the first side. More specifically, the first lidar 810 may be disposed on a front fender on the first side, or disposed on a rear fender on the first side.

Optionally, the vehicle door system 800 further includes a first processing unit. The first processing unit is configured to control, based on a position of the first obstacle relative to the first vehicle door 820, the first vehicle door 820 to be opened, or control the first vehicle door 820 to remain closed.

Optionally, the first processing unit may determine a maximum opening dimension of the first vehicle door based on the position of the first obstacle relative to the first vehicle door; control the first vehicle door to be opened when a maximum opening dimension is greater than or equal to a preset dimension threshold; and control the first vehicle door to remain closed when the maximum opening dimension is less than the preset dimension threshold, where the maximum opening dimension indicates a maximum angle at which the first vehicle door is capable of rotating and/or a maximum width at which the first vehicle door is capable of being opened under obstruction of the first obstacle.

For example, the maximum opening dimension may include the maximum opening dimension in the method 500, and the preset dimension threshold may include the preset dimension threshold in the method 500.

Optionally, when the maximum opening dimension is greater than or equal to the preset dimension threshold, the first processing unit may control, based on the maximum opening dimension or the preset dimension threshold, the first vehicle door to be opened.

For example, for a specific method for controlling, based on the maximum opening dimension or the preset dimension threshold, the first vehicle door to be opened, refer to the descriptions in the method 500. Details are not described herein again.

Optionally, when controlling the first vehicle door to remain closed, the first processing unit may further give a prompt that opening of the first vehicle door is restricted.

For example, for a specific method for giving a prompt that opening of the first vehicle door is restricted, refer to the descriptions in the method 500. Details are not described herein again.

Optionally, the vehicle further includes a transceiver unit, configured to receive a first instruction, where the first instruction is used to request the first vehicle door to be opened. The first processing unit is further configured to: when the transceiver unit receives the first instruction, control the first lidar to collect information about the first obstacle.

For example, the first instruction may include the door opening instruction in the foregoing embodiment.

Optionally, the first lidar is a short-range lidar.

FIG. 9 is a block diagram of a vehicle door system 900 according to an embodiment of this application. The vehicle door system 900 may be configured to implement the method 500. As shown in FIG. 9, the vehicle door system 900 includes a first lidar 910 and a first processing unit 920, where the first lidar 910 is disposed at a first position on a first side of a vehicle, the first position is outside a vehicle door area on the first side, and the first lidar 910 is configured to sense a first obstacle in a sweeping area of the first vehicle door. The vehicle door area includes a first vehicle door. The first processing unit 920 is configured to control, based on a position of the first obstacle relative to the first vehicle door, the first vehicle door to be opened, or control the first vehicle door to remain closed.

It should be noted that the first lidar 910 may be a lidar in the sensing system 120 shown in FIG. 1, or the first lidar 910 may be a lidar in the environment sensing module 430 shown in FIG. 4, or the first lidar 910 may include the first lidar 810 shown in FIG. 8. The first processing unit 920 may include one or more processors in the computing platform 150 shown in FIG. 1, or the first processing unit 920 may include the vehicle door control module 410 and the processing module 420 shown in FIG. 4.

For example, for a specific arrangement position of the first lidar 910, refer to the descriptions of the part corresponding to FIG. 8. Details are not described herein again.

For example, for a specific method in which the first processing unit 920 controls, based on the position of the first obstacle relative to the first vehicle door, the first vehicle door to be opened or remain closed, refer to the method 500 or the descriptions of the part corresponding to FIG. 8. Details are not described herein again.

FIG. 10 is a schematic flowchart of a control method 1000 according to an embodiment of this application. The method may be applied to the vehicle shown in FIG. 1, or the method may be performed by the system shown in FIG. 4 or FIG. 9. The method 1000 may include the following steps.

S1010: Obtain information that is about a first obstacle in a sweeping area of a first vehicle door and that is sensed by a first lidar, where the first lidar is disposed at a first position on a first side of the vehicle, the first position is located outside a vehicle door area on the first side, and the vehicle door area includes the first vehicle door.

For example, the first lidar may include the first lidar 810 in the vehicle door system 800, or may include the first lidar 910 in the vehicle door system 900. The first vehicle door may include the vehicle door in the method 500, for example, the vehicle door 1, or may further include the first vehicle door 820 in FIG. 8.

For a meaning of the sweeping area of the vehicle door, refer to the descriptions in the foregoing embodiment. Details are not described herein again.

S1020: Control, based on a position of the first obstacle relative to the first vehicle door, the first vehicle door to be opened, or control the first vehicle door to remain closed.

For example, for a specific method for controlling, based on the position of the first obstacle relative to the first vehicle door, the first vehicle door to be opened or remain closed, refer to the description in the method 500. Details are not described herein again.

It should be noted that, in this application, the vehicle door area may include a front door area or a rear door area. The front door area includes a front door of the vehicle, but does not include a rear door of the vehicle. The rear door area includes a rear door of the vehicle, but does not include a front door of the vehicle. Therefore, based on an inventive concept of this application document, a person skilled in the art disposes the lidar on the front door of the vehicle, controls, by using the method recorded in this application, the rear door of the vehicle to be opened or remain closed, and disposes the lidar on the rear door of the vehicle. According to the method recorded in this application, the front door of the vehicle is controlled to be opened or remain closed. The foregoing solution should also fall within the protection scope of this application.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

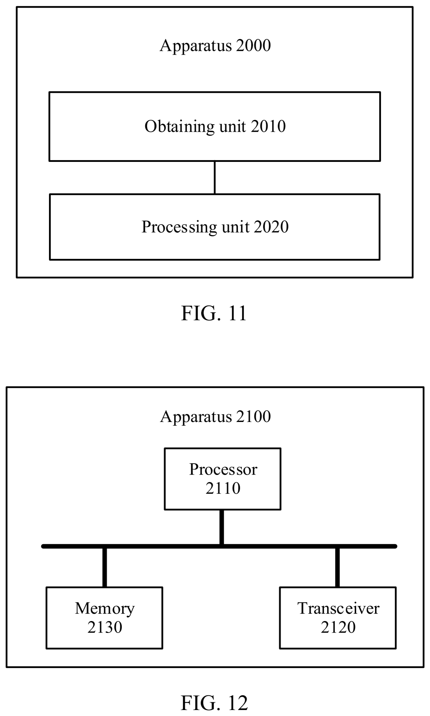

The foregoing describes in detail the methods provided in embodiments of this application with reference to FIG. 1 to FIG. 10. The following describes in detail apparatuses provided in embodiments of this application with reference to FIG. 11 and FIG. 12. It should be understood that descriptions of apparatus embodiments correspond to descriptions of method embodiments. Therefore, for content not described in detail, refer to the foregoing method embodiments. For brevity, details are not described herein again.

FIG. 11 is a block diagram of a control apparatus 2000 according to an embodiment of this application. The apparatus 2000 includes an obtaining unit 2010 and a processing unit 2020.

The apparatus 2000 may include units configured to perform the method in FIG. 10. In addition, units in the apparatus 2000 are respectively used to implement corresponding procedures in the method embodiment in FIG. 10.

Specifically, the obtaining unit 2010 is configured to obtain information that is about a first obstacle in a sweeping area of a first vehicle door and that is collected by a first lidar, where the first lidar is disposed at a first position on a first side of a vehicle, the first position is located outside a vehicle door area on the first side, and the vehicle door area is an area in which the first vehicle door is located. The processing unit 2020 is configured to: control, based on a position of the first obstacle relative to the first vehicle door, the first vehicle door to be opened, or control the first vehicle door to remain closed.

Optionally, the processing unit 2020 is configured to: determine a maximum opening dimension of the first vehicle door based on the position of the first obstacle relative to the first vehicle door, where the maximum opening dimension indicates a maximum angle at which the first vehicle door is capable of rotating and/or a maximum width at which the first vehicle door is capable of being opened under obstruction of the first obstacle; and when the maximum opening dimension is greater than or equal to a preset dimension threshold, control the first vehicle door to be opened, or when the maximum opening dimension is less than the preset dimension threshold, control the first vehicle door to remain closed.

Optionally, the processing unit 2020 is configured to: when the maximum opening dimension is greater than or equal to the preset dimension threshold, control, based on the maximum opening dimension or the preset dimension threshold, the first vehicle door to be opened.

Optionally, the first side further includes a second vehicle door, the first lidar is further configured to sense a second obstacle in a sweeping area of the second vehicle door, and the processing unit 2020 is further configured to: control, based on a position of the second obstacle relative to the second vehicle door, the second vehicle door to be opened, or control the second vehicle door to remain closed.

Optionally, the processing unit 2020 is further configured to: when controlling the first vehicle door to remain closed, give a prompt that opening of the first vehicle door is restricted.

Optionally, the obtaining unit 2010 is further configured to receive a first instruction, where the first instruction is used to request the first vehicle door to be opened. The processing unit 2020 is further configured to control, according to the first instruction, the first lidar to collect information about the first obstacle.

Optionally, the first lidar is a short-range lidar.

For example, the obtaining unit 2010 and the processing unit 2020 may be disposed in the intelligent driving device 100 shown in FIG. 1. More specifically, the obtaining unit 2010 and the processing unit 2020 may be disposed in the computing platform 150 shown in FIG. 1. For example, the processing unit 2020 may further include the vehicle door control module 410 and the processing module 420 shown in FIG. 4.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated together, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

In a specific implementation process, the operations performed by the obtaining unit 2010 and the processing unit 2020 may be performed by one processor, or may be performed by different processors. In a specific implementation process, one or more processors may be processors disposed on the computing platform 150 shown in FIG. 1. Alternatively, the apparatus 2000 may be a chip disposed in the vehicle 100.

FIG. 12 is a block diagram of a control apparatus according to an embodiment of this application. A control apparatus 2100 shown in FIG. 12 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the communication method in the foregoing embodiments. Optionally, the memory 2130 may be coupled to the processor 2110 through an interface, or may be integrated with the processor 2110.

It should be noted that the transceiver 2120 may include but is not restricted to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses a transceiver apparatus, for example, but not restricted to, a transceiver, to implement communication between the apparatus 2100 and another device or a communication network, to receive/send data/information used to implement the communication method in the foregoing embodiments.

In a specific implementation process, the apparatus 2100 may be disposed in the computing platform 150 shown in FIG. 1.

An embodiment of this application further provides a vehicle. The vehicle includes the vehicle door system 800 or the vehicle door system 900. Alternatively, the vehicle includes the control apparatus 2000 or the control apparatus 2100.

An embodiment of this application further provides a computer program product. The computer program product includes computer program code. When the computer program code is run on a computer, the computer is enabled to implement the communication methods in the foregoing embodiments of this application.

An embodiment of this application further provides a computer-readable storage medium. The computer-readable medium stores computer instructions. When the computer instructions are run on a computer, the computer is enabled to implement the communication methods in the foregoing embodiments of this application.

An embodiment of this application further provides a chip. The chip includes a circuit, configured to perform the communication methods in the foregoing embodiments of this application.

In an implementation process, the steps in the foregoing methods can be completed by using an integrated logical circuit of hardware in the processor, or by using instructions in a form of software. The method of the communication disclosed with reference to embodiments of this application may be directly performed by a hardware processor, or may be performed by using a combination of hardware in a processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle door system, comprising a first vehicle door and a first lidar, wherein
the first vehicle door is located on a first side of a vehicle; and
the first lidar is disposed at a first position on the first side, the first position is outside a vehicle door area on the first side, the first lidar is configured to sense a first obstacle in a sweeping area of the first vehicle door, and the vehicle door area is an area in which the first vehicle door is located.

2. The system according to claim 1, wherein the first position is located at any one of the following: between a front of the vehicle and the vehicle door area on the first side, between a rear of the vehicle and the vehicle door area on the first side, and a B-pillar on the first side.

3. The system according to claim 2, wherein when the first position is located between the front of the vehicle and the vehicle door area on the first side, the first position is an area on a front fender on the first side; or
when the first position is located between the rear of the vehicle and the vehicle door area on the first side, the first position is an area on a rear fender on the first side.

4. The system according to any one of claims 1 to 3, wherein the vehicle further comprises a second vehicle door, the second vehicle door is located on the first side, and the first lidar is further configured to sense a second obstacle in a sweeping area of the second vehicle door.

5. The system according to any one of claims 1 to 4, wherein the vehicle further comprises a first processing unit, and the first processing unit is configured to control, based on a position of the first obstacle relative to the first vehicle door, the first vehicle door to be opened, or control the first vehicle door to remain closed.

6. The system according to claim 5, wherein the first processing unit is configured to:
determine a maximum opening dimension of the first vehicle door based on the position of the first obstacle relative to the first vehicle door; and
when the maximum opening dimension is greater than or equal to a preset dimension threshold, control the first vehicle door to be opened; or
when the maximum opening dimension is less than the preset dimension threshold, control the first vehicle door to remain closed, wherein
the maximum opening dimension indicates a maximum angle at which the first vehicle door is capable of rotating and/or a maximum width at which the first vehicle door is capable of being opened under obstruction of the first obstacle.

7. The system according to claim 6, wherein the first processing unit is configured to:
when the maximum opening dimension is greater than or equal to the preset dimension threshold, control, based on the maximum opening dimension or the preset dimension threshold, the first vehicle door to be opened.

8. The system according to any one of claims 5 to 7, wherein the first processing unit is further configured to:
when controlling the first vehicle door to remain closed, give a prompt that opening of the first vehicle door is restricted.

9. The system according to any one of claims 5 to 8, wherein the system further comprises a transceiver unit, configured to receive a first instruction, wherein the first instruction is used to request the first vehicle door to be opened; and
the first processing unit is further configured to:
when the transceiver unit receives the first instruction, control the first lidar to collect information about the first obstacle.

10. The system according to any one of claims 1 to 9, wherein the first lidar is a short-range lidar.

11. A control method, comprising:
obtaining information that is about a first obstacle in a sweeping area of a first vehicle door and that is collected by a first lidar, wherein the first lidar is disposed at a first position on a first side of a vehicle, the first position is outside a vehicle door area on the first side, and the vehicle door area is an area in which the first vehicle door is located; and
controlling, based on a position of the first obstacle relative to the first vehicle door, the first vehicle door to be opened, or controlling the first vehicle door to remain closed.

12. The method according to claim 11, wherein controlling, based on the position of the first obstacle relative to the first vehicle door, the first vehicle door to be opened, or controlling the first vehicle door to remain closed comprises:
determining a maximum opening dimension of the first vehicle door based on the position of the first obstacle relative to the first vehicle door; and
when the maximum opening dimension is greater than or equal to a preset dimension threshold, controlling the first vehicle door to be opened; or
when the maximum opening dimension is less than the preset dimension threshold, controlling the first vehicle door to remain closed, wherein
the maximum opening dimension indicates a maximum angle at which the first vehicle door is capable of rotating and/or a maximum width at which the first vehicle door is capable of being opened under obstruction of the first obstacle.

13. The method according to claim 12, wherein when the maximum opening dimension is greater than or equal to a preset dimension threshold, controlling the first vehicle door to be opened comprises:
when the maximum opening dimension is greater than or equal to the preset dimension threshold, controlling, based on the maximum opening dimension or the preset dimension threshold, the first vehicle door to be opened.

14. The method according to any one of claims 11 to 13, wherein the first side further comprises a second vehicle door, the first lidar is further configured to sense a second obstacle in a sweeping area of the second vehicle door, and the method further comprises:
controlling, based on a position of the second obstacle relative to the second vehicle door, the second vehicle door to be opened, or controlling the second vehicle door to remain closed.

15. The method according to any one of claims 11 to 14, wherein the method further comprises:
when controlling the first vehicle door to remain closed, giving a prompt that opening of the first vehicle door is restricted.

16. The method according to any one of claims 11 to 15, wherein the method further comprises:
receiving a first instruction, wherein the first instruction is used to request the first vehicle door to be opened; and
controlling, according to the first instruction, the first lidar to collect the information about the first obstacle.

17. The method according to any one of claims 11 to 16, wherein the first lidar is a short-range lidar.

18. A control apparatus, comprising:
an obtaining unit, configured to obtain information that is about a first obstacle in a sweeping area of a first vehicle door and that is collected by a first lidar, wherein the first lidar is disposed at a first position on a first side of a vehicle, the first position is outside a vehicle door area on the first side, and the vehicle door area is an area in which the first vehicle door is located; and
a processing unit, configured to control, based on a position of the first obstacle relative to the first vehicle door, the first vehicle door to be opened, or control the first vehicle door to remain closed.

19. The apparatus according to claim 18, wherein the processing unit is configured to:
determine a maximum opening dimension of the first vehicle door based on the position of the first obstacle relative to the first vehicle door; and
when the maximum opening dimension is greater than or equal to a preset dimension threshold, control the first vehicle door to be opened; or
when the maximum opening dimension is less than the preset dimension threshold, control the first vehicle door to remain closed, wherein
the maximum opening dimension indicates a maximum angle at which the first vehicle door is capable of rotating and/or a maximum width at which the first vehicle door is capable of being opened under obstruction of the first obstacle.

20. The apparatus according to claim 19, wherein the processing unit is configured to:
when the maximum opening dimension is greater than or equal to the preset dimension threshold, control, based on the maximum opening dimension or the preset dimension threshold, the first vehicle door to be opened.

21. The apparatus according to any one of claims 18 to 20, wherein the first side further comprises a second vehicle door, the first lidar is further configured to sense a second obstacle in a sweeping area of the second vehicle door, and the processing unit is further configured to:
control, based on a position of the second obstacle relative to the second vehicle door, the second vehicle door to be opened, or control the second vehicle door to remain closed.

22. The apparatus according to any one of claims 18 to 21, wherein the processing unit is further configured to:
when controlling the first vehicle door to remain closed, give a prompt that opening of the first vehicle door is restricted.

23. The apparatus according to any one of claims 18 to 22, wherein the obtaining unit is further configured to:
receive a first instruction, wherein the first instruction is used to request the first vehicle door to be opened; and
the processing unit is further configured to control, according to the first instruction, the first lidar to collect the information about the first obstacle.

24. The apparatus according to any one of claims 18 to 23, wherein the first lidar is a short-range lidar.

25. A control apparatus, comprising:
a memory, configured to store a computer program; and
a processor, configured to execute the computer program stored in the memory, to enable the apparatus to perform the method according to any one of claims 11 to 17.

26. A vehicle, comprising the vehicle door system according to any one of claims 1 to 10, or comprising the control apparatus according to any one of claims 18 to 25.

27. A computer-readable storage medium, wherein the computer-readable storage medium stores instructions; and when the instructions are executed by a processor, the processor is enabled to implement the method according to any one of claims 11 to 17.

28. A chip, wherein the chip comprises a circuit, and the circuit is configured to perform the method according to any one of claims 11 to 17.

29. A computer program product, wherein the computer program product comprises computer program code, and when the computer program code runs on a computer, the computer is enabled to perform the method according to any one of claims 11 to 17.
